# EUROPÄISCHE PATENTSCHRIFT

(11) **EP 1 034 226 B1**
(45) Veröffentlichungstag und Bekanntmachung des Hinweises auf die Patenterteilung: **02.05.2003**
(21) Anmeldenummer: 98963434.0
(22) Anmeldetag: 10.11.1998
(51) Int. Cl.: C09D 7/00, B01D 19/04

(54) **ANTISCHAUMMITTEL UND SEINE VERWENDUNG IN LACKKOAGULIERBÄDERN**
ANTIFOAM AGENT
ANTIMOUSSANT

(30) Priorität: 19.11.1997 DE 19751288
(43) Veröffentlichungstag der Anmeldung: 13.09.2000
(73) Patentinhaber: Henkel Kommanditgesellschaft auf Aktien, 40589 Düsseldorf (DE)
(72) Erfinder: REHM, Hans-Jörgen, D-40724 Hilden (DE); GEKE, Jürgen, D-40225 Düsseldorf (DE); RÜSSE, Steffen, D-40789 Monheim (DE)
(86) Internationale Anmeldenummer: EP9807164
(87) Internationale Veröffentlichungsnummer: WO99025779

(56) Entgegenhaltungen:
- EP-A- 0 036 597
- WO-A-90/07967
- DATABASE WPI Section Ch, Week 9730 Derwent Publications Ltd., London, GB; Class A97, AN 97-328639 XP002101844 & JP 09 132796 A (KAO CORP), 20. Mai 1997
- DATABASE WPI Section Ch, Week 8836 Derwent Publications Ltd., London, GB; Class A97, AN 88-252939 XP002101845 & JP 63 182488 A (NIPPON OILS & FATS CO LTD), 27. Juli 1988

## Beschreibung

Die Erfindung betrifft ein Antischaummittel zur Bekämpfung von Schaum in wäßrigen Systemen. Besonders geeignet ist es zur Schaumdämpfung in Lackkoagulierbädern, insbesondere in den Lackierereien von Automobilfabriken.

In Lackierereien wie insbesondere im Automobilbau werden derzeit ein- oder mehrere lösungsmittel- oder wasserbasierte Lackschichten auf die Bauteile aufgespritzt. Derjenige Anteil des Lacks, der sich nicht wie erwünscht auf den Bauteilen niederschlägt, wird aus der Abluft oder von den Wänden der Lackierkabinen durch Wasser ausgewaschen und in einem Koagulierbecken gesammelt. Das Wasser wird dabei nach Möglichkeit im Kreislauf geführt. Damit das Wasser möglichst lange wiederverwendet werden kann, müssen die Lackteilchen, die als Emulsion oder Suspension im Koagulierbecken vorliegen, entklebt und koaguliert werden. Je nach Anlagenkonfiguration und Verfahrensführung flottieren oder sedimentieren die entklebten und koagulierten Lackpartikel, so daß sie mit geeigneten Austragvorrichtungen und/oder Separatoren aus dem Umlaufwasser des Koagulierbades ausgetragen und wiederverwertet oder entsorgt werden können.

Zur Entklebung und Koagulierung der Lackpartikel sind in der Praxis unterschiedliche Typen von Koaguliermittel gebräuchlich. Beispielsweise können die Koaguliermittel wasserunlösliche Teilchen mit hoher spezifischer Oberfläche wie beispielsweise Schichtsilicate, insbesondere solche vom Typ der Bentonite, enthalten oder ganz aus diesen bestehen. Anstelle solcher Partikel mit hohen Oberflächen oder zusammen mit ihnen können als Koaguliermittel auch organische Polymere wie beispielsweise acrylsäurehaltige Polymere, Polyethylenimine oder Polyamidoamine verwendet werden. Weiterhin sind Koaguliermittel auf Basis von Wachsen oder von Harzen bekannt. Als weitere Wirk- oder Hilfsstoffe können die Koaguliermittel beispielsweise Cyanamid, Dicyandiamid und/oder Molybdate enthalten. Die Wirkstoffkombination der Koaguliermittel entklebt und koaguliert den Lack, hält den pH-Wert des Koagulierbades im erwünschten Bereich, verlangsamt oder verhindert mikrobiologische Zersetzungsprozesse im Koagulierbad, sorgt dafür, daß die entklebten und koagulierten Lackpartikel flocken und je nach Anlagentechnik sedimentieren, flottieren oder im Umlaufwasser zur Entfernung mit Separatoren in Schwebe gehalten werden.

Zur Aufrechterhaltung der Funktionsfähigkeit der Lackieranlage, Einhaltung der gesetzlichen Grenzwerte für Abwasser und Abluft sowie einer wirtschaftlichen Produktion ist also zur Entsorgung des Lackoversprays (neben Lacken werden in diesen Anlagen auch andere Beschichtungsmittel wie Wachse, Unterbodenschutzmaterialien verarbeitet) aus dem Umlaufwasser ein abgestimmtes Produktkonzept erforderlich, das folgende Komponenten enthält:
- Koaguliermittel
- Additive zur Lackentklebung, pH-Korrektur, Konservierung
- Flockungsmittel zur Entfernung des Lackschlammes, abgestimmt auf die Anlagentechnik
- Schlammentwässerungsmittel, abgestimmt auf die Trocknungstechnik für den Lackschlamm
- Antischaummittel.
   Aus umwelttechnischen Gründen (Verminderung der Lösemittelemmission) hat der Anteil von Wasserlacken stark zugenommen. Die in diesen Lacken enthaltenen Netzmittel können starken Schaum im Umlaufwasser der Lackspritzkabinen verursachen. Schaum verhindert oder beeinträchtigt
- die Denaturierung (Koagulierung, Entklebung) des Lackschlammes
- das Absetzverhalten (Flotation/Sedimentation) des Lackschlammes
- die Wirkung der Flockungs- und Schlammentwässerungsmittel zur sauberen Abtrennung des Lackschlammes aus dem Umlaufwasser und störungsfreien Entwässerung
- die Abluftanlage.

Die Folge: Mehrkosten und zum Teil hoher manueller Reinigungsaufwand durch nicht entklebten Lack. Dadurch kann die Funktionsfähigkeit der gesamten Lackieranlage empfindlich gestört werden und im Extremfall Produktionsstillstand auftreten mit hohen Folgekosten, insbesondere in Großanlagen in der Automobilindustrie. Daher ist der Einsatz eines geeigneten Antischaummittels, abgestimmt auf die Lacke, die Applikationstechnik, die Anlagentechnik, die Lackschlamm-Entsorgungstechnik und das übrige Produktkonzept unbedingt erforderlich.

Die heute in wasserberieselten Lackspritzkabinen und in den zugehörigen Koagulierbädern üblicherweise eingesetzten Antischaummittel bestehen meistens aus Mineralöl als Basiskomponente. Zusätzlich enthalten Sie in der Regel eine oder mehrere der folgenden Komponenten: hydrophobierte Kieselsäuren, Metallseifen, Fettalkohole, alkoxylierte Fettsäuren, Polyethylenglykole, Ethylenoxid/Propylenoxid-Blockpolymere, Polymerwachse, Lösungsvermittler, Netzmittel, Emulgatoren und Silikone. Die für die Konfektionierung und die Produktstabilität von Antischaummitteln auf Basis der vorstehend genannten Komponenten erforderlichen Emulgatoren können selbst sehr stark schäumen. Nach längerer Zugabe der Antischaummittel können sich die Emulgatoren bei den besonders in der Automobilindustrie üblichen langen Standzeiten des Umlaufwassers von bis zu einem Jahr stark anreichern. Sie führen dann selbst zu einem starken Schäumen des Umlaufwassers. Der entstehende, teilweise sehr stabile Schaum kann teilweise nur mit Silikon-haltigen Antischaummitteln gedämpft werden. Die Verwendung Silikon-haltiger Produkte in Lackierbetrieben bringt jedoch die Gefahr mit sich, daß Lackfehler wie beispielsweise die sogenannte Orangenhaut auftreten können. Daher sind in den meisten Lackierbetrieben Silikon-haltige Antischaummittel nicht zugelassen.

Die Verwendung von Mineralölen als Basiskomponente der bisher üblicherweise verwendeten Entschäumer hat den Nachteil, daß ein Mineralöl-haltiges Umlaufwasser entsteht, dessen nach einer bestimmten Standzeit erforderliche Entsorgung durch den Mineralölgehalt erschwert wird. Mineralöle sind in der Regel nicht oder nur schlecht biologisch abbaubar, führen zu einer gewissen aquatischen Toxizität, was nach deutschem Recht die Einordnung in die entsprechende Wassergefährdungsklasse erforderlich macht, und behindern die Funktionsfähigkeit von Kläranlagen.

Daher besteht ein Bedarf nach Antischaummitteln, die diese Nachteile nicht aufweisen. Insbesondere besteht ein Bedarf nach Antischaummitteln, die zu ihrer Konfektionierung keine schäumenden Komponenten wie beispielsweise Emulgatoren benötigen. Weiterhin besteht ein Bedarf nach Antisehaummitteln, deren Komponenten eine verringerte aquatische Toxizität aufweisen, so daß sie nach deutschem Recht in eine geringere Wassergefährdungsklasse eingeordnet werden können.

In der WO-A-90/07967 werden Antischaummittel beschrieben, die 33 bis 89 Gew.-% eines C₁₆₋₂₂-Fettsäure(mono-bis-penta)ethoxylats oder -(mono-bis-penta)propoxylats und 67 bis 11 Gew.-% eines Blockpolymeren des Propylenoxids mit Ethylenoxid mit einem Molekulargewicht von etwa 3800, einem Trübungspunkt (berechnet als 10%ige wäßrige Lösung) von 9 °C bis 13 °C und einem HLB-Wert von etwa 1 enthalten. Derartige Antischaummittel finden Verwendung in der lackverarbeitenden Industrie, insbesondere bei der Lackierung von Kraftfahrzeugen, zur Schauminhibierung im Umlaufwasser von Naßabscheidem für Spritzlackieranlagen.

Die Erfindung betrifft Antischaummittel, enthaltend eine Kombination aus
a) ungesättigten oder gesättigten, linearen oder verzweigten Carbonsäuren mit 10 bis 22 C-Atomen,
b) Polypropylenglykolen und/oder Ethylenoxid/Propylenoxid-Blockpolymeren mit Molmassen im Bereich von 1000 bis 5000,
c) primären Alkoholen mit 5 bis 16 C-Atomen und/oder Glycerin-Fettsäureester
im Gewichtsverhältnis 1 - 30 Gewichtsteile a) zu 1 - 50 Gewichtsteile b) zu 50 - 90 Gewichtsteile c).

Die Kombination der genannten Komponenten a) bis c) führt in der Regel ohne weitere Hilfs- oder Wirkstoffe zu einer sehr effektiven Schaumdämpfung, besonders im Umlaufwasser von Lackspritzkabinen. Die Kältestabilität und damit die Lagerfähigkeit des Antischaummittels im Winter kann jedoch weiter verbessert werden, wenn man dem Antischaummittel zusätzlich 1 bis 30 Gewichtsteile Diole mit 2 bis 10 C-Atomen zusetzt.

Das Antischaummittel kann als eigenständige Zubereitung formuliert werden, die dem zu entschäumenden System unabhängig von anderen Mitteln zugegeben werden kann. In dieser Zubereitungsform ist das Antischaummittel dadurch gekennzeichnet, daß es
a) 1 bis 30 Gew.-% ungesättigte oder gesättigte, lineare oder verzweigte Carbonsäuren mit 10 bis 22 C-Atomen,
b) insgesamt 1 bis 49 Gew.-% Polypropylenglykole und/oder Ethylenoxid/Propylenoxid-Blockpolymere mit Molmassen im Bereich von 1000 bis 5000,
c) insgesamt 50 bis 90 Gew.-% primäre Alkohole mit 5 bis 16 C-Atomen und/oder Glycerin-Fettsäureester und
d) 0 bis 30 Gew.-% Diole mit 2 bis 10 C-Atomen
sowie gegebenenfalls weitere Wirk- oder Hilfstoffe enthält, wobei die Summe der Bestandteile 100 % ergibt.

Vorzugsweise enthält das Antischaummittel die Komponente a) in Anteilen von etwa 2 bis etwa 15 Gew.-%. Als Komponente a) kommen insbesondere gesättigte oder ein- oder mehrfach ungesättigte lineare Carbonsäuren oder Mischungen mehrerer dieser Säuren in Betracht. Als geeignete Carbonsäuren beispielsweise genannt seien Caprinsäure, Palmitinsäure, Ölsäure, Stearinsäure, Linolsäure, Linolensäure, Erucasäure und Behensäure.

Die Carbonsäuren a) können als definierte Reinsubstanzen verwendet werden. Ökonomisch attraktiver ist es jedoch, Mischungen von Carbonsäuren zu verwenden, wie sie bei der Spaltung natürlich vorkommender pflanzlicher oder tierischer Fette und Öle erhalten werden.

Die Komponente b) wird vorzugsweise im Mengenbereich von etwa 3 bis etwa 20 Gew.-% eingesetzt. Vorzugsweise besteht die Komponente b) aus Polypropylenglykolen und/oder Ethylenoxid/Propylenoxid-Blockpolymeren mit Molmassen im Bereich von 3.000 bis 4.000.

Die Komponente c) wird vorzugsweise im Mengenbereich zwischen 70 und 90 Gew.-% eingesetzt. Selbstverständlich können dabei nur solche Mischungen aus den Komponenten a), b), c) und gegebenenfalls d) und weitere Komponenten formuliert werden, bei denen sich die Anteile der Komponenten zu 100 % addieren.

Beispielsweise kann die Komponente c) aus primären linearen oder verzweigten aliphatischen Alkoholen mit 7 bis 10 C-Atomen oder aus Mischungen derartiger Alkohole bestehen. Beispielsweise können synthetische Alkoholmischungen verwendet werden, die als "Oxoöle" bekannt sind.

Zusammen mit diesen Alkoholen oder anstelle von diesen können als Komponente c) pflanzliche oder tierische Öle eingesetzt werden. Derartige Öle sind Ester bestimmter Fettsäuren mit Glycerin und werden häufig kurz als "Triglyceride" bezeichnet. Beispielsweise kann es sich hierbei um Glycerinester von ein- oder mehrfach ungesättigten Fettsäuren wie beispielsweise Ölsäure, Linolsäure, Linolensäure und Erucasäure handeln. Beispiele derartiger natürlicher, also pflanzlicher oder tierischer Öle sind Raps- und Rüböle.

Als fakultative Komponente d) können die Antischaummittel insbesondere alpha-, omega-Diole mit 2 bis 6 C-Atomen enthalten. Beispiele hierfür sind Ethylenglykol, 1,3-Propylenglykol, 1,4-Butandiol, 1,5-Pentandiol und 1,6-Hexandiol. Für die entschäumende Wirkung sind diese Diole nicht erforderlich. Sie verbessern jedoch die Kältestabilität der Gesamtformulierung.

Der besondere Vorteil der erfindungsgemäßen Antischaummittel liegt darin, daß sie ohne die Verwendung von Mineralöl und/oder von Emulgatoren formuliert werden können. Besonders günstig sind solche Formulierungen, die weder Mineralöl noch Emulgatoren enthalten. Durch den möglichen Verzicht auf diese Komponenten können die erfindungsgemäßen Antischaummittel umweltfreundlicher formuliert werden als Antischaummittel nach dem Stand der Technik. Beispielsweise weisen sie eine verringerte aquatische Toxizität auf und können daher nach deutschem Recht in eine geringere Wassergefährdungsklasse eingeordnet werden. Durch geeignete Wahl der genannten essentiellen und fakultativen Komponenten können gut biologisch abbaubare Antischaummittel zur Verfügung gestellt werden.

Zur Zubereitung der erfindungsgemäßen Antischaummittel ist es nicht erforderlich, Emulgatoren einzusetzen. Damit kann das Anreichern dieser selbst zu Schaum führenden Komponenten in dem zu entschäumenden System vermieden werden. Daher ist es auch nicht erforderlich, den erfindungsgemäßen Antischaummitteln Silikone als weitere schaumdrückende Komponenten zuzusetzen. Eine negative Rückwirkung auf das Lackierergebnis kann somit vermieden werden.

Die erfindungsgemäßen Antischaummittel sind besonders konzipiert zur Verwendung als schaumdrückender Zusatz zu Lackkoagulierbäder, insbesondere in der Automobilindustrie. Sie sind sowohl für Koagulierbäder für Lösungsmittellacke als auch für Wasserlacke geeignet. Die schaumdrückende Wirkung tritt bereits in sehr weichem Wasser ein und steigt mit zunehmender Wasserhärte. Eine Wasserhärte von 2,5 ° Deutscher Härte (entsprechend 17,9 mg/l Calciumionen) führt bereits zu einer wirksamen Schaumdämpfung.

Da die erfindungsgemäßen Antischaummittel keine zusätzlichen Hilfsstoffe wie beispielsweise Emulgatoren enthalten müssen, können sie bei der erfindungsgemäßen Verwendung in geringeren Mengen dosiert werden als bisher im Stand der Technik üblich. Dies bringt sowohl ökologische als auch ökonomische Vorteile mit sich. Die Dosierung der erfindungsgemäßen Antischaummittel in das Koagulierbad kann bedarfsabhängig kontinuierlich oder zeitgetaktet mit geeigneten Dosierpumpen oder mit automatischer Dosiertechnik erfolgen.

Die Fettsäurekomponente des Antischaummittels zeigt in Verbindung mit lonen der Wasserhärte (Calcium- und/oder Magnesiumionen) selbst eine gewisse koagulierende Wirkung. Hierdurch ergänzt das Antischaummittel die Wirkung der Koaguliermittel, so daß diese in verringerter Menge eingesetzt werden können. Hierdurch wird ein weiterer ökonomischer und ökologischer Vorteil bewirkt.

### Wirkungsnachweis

Die entschäumende Wirkung erfindungsgemäßer Antischaummittel wurde im Vergleich zu einem technisch eingesetzten mineralölbasierten Antischaummittel in einem Schüttelzylindertest getestet. Als schäumendes Agens wurde zum einen ein anionisches, zum anderen ein kationisches Tensid eingesetzt.

Zur Durchführung des Tests gibt man in einen Schüttelzylinder mit einem Volumen von 100 ml 50 ml einer 0,1 Gew.-%igen Netzmittellösung in Wasser mit einem Härtegrad von 16 °dH. Hierzu gibt man mittels eines Glasstabs einen Tropfen des zu prüfenden Antischaummittels. Anschließend schüttelt man den Zylinder 10 mal kräftig mit der Hand. Zur Auswertung mißt man die Schaumhöhe sofort nach Ende des Schüttelns ("nach 0 Sekunden") sowie nach 1, 2, 5 und 10 Minuten. Hierdurch erkennt man sowohl die unmittelbare schaumverhindemde Wirkung als auch den Schaumzerfall abhängig von der Zeit.

Die Zusammensetzung der geprüften erfindungsgemäßen Antischaummittel ist in Tabelle 1 enthalten. Dabei bedeuten Komponente
a): Mischung ein- oder mehrfach ungesättigter linearer Carbonsäuren mit 10 bis 22 C-Atomen,
b): Polypropylenglykol mit einer Molmasse zwischen 3.000 und 4.000,
c1): Mischung primärer aliphatischer Alkohole mit 7 bis 10 C-Atomen ("Oxoöl"),
c2): natürliches pflanzliches Öl (Rüböl),
d): Propylenglykol

**Tabelle 1:**

| Zusammensetzung (Gew.-%) erfindungsgemäßer Antischaummittel | | | | | |
|---|---|---|---|---|---|
| Komponente | Beisp.1 | Beisp.2 | Beisp.3 | Beisp.4 | Beisp.5 |
| a) | 10 | 10 | 2 | 4 | 4 |
| b) | 10 | 10 | 20 | 3 | 3 |
| c1) | 80 | - | 73 | 88 | - |
| c2) | - | 80 | - | - | 88 |
| d) | - | - | 5 | 5 | 5 |

Als Vergleichssubstanz wurde ein handelsübliches Antischaummittel (P3-cronisol^{R} 672, Henkel KGaA, Düsseldorf) eingesetzt, das aus einer Mischung von Mineralöl, Fettsäureester, Polyethylenglykol-Fettsäureester, Metallstearate, Ethylenoxid/Propylenoxid-Blockpolymere und Fettsäurepropoxylat besteht. Die Ergebnisse für die Entschäumung einer Alkylbenzolsulfonatlösung sind in Tabelle 2, für die Entschäumung einer Dimethyldodecylbenzylammoniumchloridlösung in Tabelle 3 enthalten.

**Tabelle 2:**

| Antischaumwirkung gegenüber Alkylbenzolsulfonatlösung | | | | | |
|---|---|---|---|---|---|
| Antischaummittel | Schaumhöhe (ml) nach | | | | |
| | 0 Sekunden | 1 Minute | 2 Minuten | 5 Minuten | 10 Minuten |
| Vergleich | 40 | 40 | 35 | 32 | 30 |
| Beisp.1 | 30 | 30 | 25 | 20 | 10 |
| Beisp.2 | 55 | 55 | 50 | 45 | 40 |
| Beisp.3 | 35 | 35 | 30 | 25 | 20 |
| Beisp.4 | 10 | 7 | 5 | 3 | 1 |
| Beisp.5 | 45 | 45 | 40 | 35 | 35 |

**Tabelle 3:**

| Antischaumwirkung gegenüber Dimethyldodecylbenzylammoniumchloridlösung | | | | | |
|---|---|---|---|---|---|
| Antischaummittel | Schaumhöhe (ml) nach | | | | |
| | 0 Sekunden | 1 Minute | 2 Minuten | 5 Minuten | 10 Minuten |
| Vergleich | 15 | 7 | 6 | 6 | 5 |
| Beisp.1 | 8 | 7 | 6 | 5 | 3 |
| Beisp.2 | 25 | 23 | 21 | 18 | 12 |
| Beisp.3 | 10 | 9 | 8 | 6 | 5 |
| Beisp.4 | 5 | 2 | 0 | 0 | 0 |
| Beisp.5 | 20 | 18 | 16 | 10 | 8 |

Für das Antischaummittel gemäß Beispiel 4 wurde die entschäumende Wirkung gegenüber Alkylbenzotsulfonatlösung als Funktion der Wasserhärte überprüft. Hierfür wurde der vorstehend beschriebene Schütteizylindertest durchgeführt. Im Gegensatz zu den dortigen Angaben wurde die Netzmittellösung jedoch in Wasser mit einem unterschiedlichen Härtegrad gemäß Tabelle 4 angesetzt. Die Tabelle 4 zeigt für die unterschiedlichen Härtegrade die Schaumhöhe sofort nach Ende des Schüttelns ("nach 0 Sekunden") sowie nach 1, 2, 5 und 10 Minuten.

**Tabelle 4:**

| Antischaumwirkung gegenüber Alkylbenzolsulfonatlösung als Funktion der Wasserhärte (1 °dH entspricht 7,16 mg/l Ca), Antischaummittel gemäß Beispiel 4 | | | | | |
|---|---|---|---|---|---|
| Wasserhärte (°dH) | Schaumhöhe (ml) nach | | | | |
| | 0 Sekunden | 1 Minute | 2 Minuten | 5 Minuten | 10 Minuten |
| 0 | 60 | 60 | 60 | 45 | 40 |
| 2,5 | 40 | 40 | 40 | 40 | 34 |
| 5 | 35 | 35 | 35 | 31 | 30 |
| 10 | 30 | 28 | 25 | 22 | 21 |
| 25 | 10 | 7 | 5 | 5 | 4 |
| 50 | 5 | 4 | 4 | 4 | 3 |

## Patentansprüche

1. Antischaummittel, enthaltend eine Kombination aus
a) ungesättigten oder gesättigten, linearen oder verzweigten Carbonsäuren mit 10 bis 22 C-Atomen,
b) Polypropylenglykolen und/oder Ethylenoxid/Propylenoxid-Blockpolymeren mit Molmassen im Bereich von 1000 bis 5000,
c) primären Alkoholen mit 5 bis 16 C-Atomen und/oder Glycerin-Fettsäureester
im Gewichtsverhältnis 1 - 30 Gewichtsteile a) zu 1 - 50 Gewichtsteile b) zu 50 - 90 Gewichtsteile c).

2. Antischaummittel nach Anspruch 1, **dadurch gekennzeichnet, daß** es zusätzlich als Komponente d) 1 - 30 Gewichtsteile Diole mit 2 bis 10 C-Atomen enthält.

3. Antischaummittel nach Anspruch 1, **dadurch gekennzeichnet, daß** es
a) 1 bis 30 Gew.-% ungesättigte oder gesättigte, lineare oder verzweigte Carbonsäuren mit 10 bis 22 C-Atomen,
b) insgesamt 1 bis 49 Gew.-% Polypropylenglykole und/oder Ethylenoxid/Propylenoxid-Blockpolymere mit Molmassen im Bereich von 1000 bis 5000,
c) insgesamt 50 bis 90 Gew.-% primäre Alkohole mit 5 bis 16 C-Atomen und/oder Glycerin-Fettsäureester und
d) 0 bis 30 Gew.-% Diole mit 2 bis 10 C-Atomen
sowie gegebenenfalls weitere Wirk- oder Hilfstoffe enthält, wobei die Summe der Bestandteile 100 % ergibt.

4. Antischaummittel nach einem oder beiden der Ansprüche 2 und 3, **dadurch gekennzeichnet, daß** es als Komponente d) α,ω-Diole mit 2 bis 6 C-Atomen enthält.

5. Antischaummittel nach einem oder mehreren der Ansprüche 1 bis 4, **dadurch gekennzeichnet, daß** es als Komponente a) eine oder mehrere gesättigte oder ein-oder mehrfach ungesättigte lineare Carbonsäuren enthält.

6. Antischaummittel nach einem oder mehreren der Ansprüche 1 bis 5, **dadurch gekennzeichnet, daß** es als Komponente b) Polypropylenglykole und/oder Ethylenoxid/Propylenoxid-Blockpolymere mit Molmassen im Bereich von 3000 bis 4000 enthält.

7. Antischaummittel nach einem oder mehreren der Ansprüche 1 bis 6, **dadurch gekennzeichnet, daß** es als Komponente c) einen oder mehrere primäre lineare oder verzweigte aliphatische Alkohole mit 7 bis 10 C-Atomen enthält.

8. Antischaummittel nach einem oder mehreren der Ansprüche 1 bis 6, **dadurch gekennzeichnet, daß** es als Komponente c) pflanzliche oder tierische Öle enthält.

9. Antischaummittel nach einem oder mehreren der Ansprüche 1 bis 8, **dadurch gekennzeichnet, daß** es frei ist von Mineralöl und/oder von Emulgatoren.

10. Verwendung des Antischaummittels nach einem oder mehreren der Ansprüche 1 bis 9 als schaumdrückender Zusatz zu Lackkoagulierbäder.

## Claims

1. An antifoam agent containing a combination of
a) unsaturated or saturated, linear or branched C₁₀₋₂₂ carboxylic acids,
b) polypropylene glycols and/or ethylene oxide/propylene oxide block copolymers with molecular weights in the range from 1,000 to 5,000,
c) primary C₅₋₁₆ alcohols and/or glycerol fatty acid esters
in a ratio by weight of 1 - 30 parts by weight a) to 1 - 50 parts by weight b) to 50 - 90 parts by weight c).

2. An antifoam agent as claimed in claim 1, **characterized in that** it additionally contains 1 - 30 parts by weight C₂₋₁₀ diols as component d).

3. An antifoam agent as claimed in claim 1, **characterized in that** it contains
a) 1 to 30% by weight of unsaturated or saturated, linear or branched C₁₀₋₂₂ carboxylic acids,
b) a total of 1 to 49% by weight of polypropylene glycols and/or ethylene oxide/propylene oxide block copolymers with molecular weights in the range from 1,000 to 5,000,
c) a total of 50 to 90% by weight of primary C₅₋₁₆ alcohols and/or glycerol fatty acid esters and
d) 0 to 30% by weight of C₂₋₁₀ diols.
and optionally other active ingredients or auxiliaries, the sum of the constituents being 100%.

4. An antifoam agent as claimed in one or both of claims 2 and 3, **characterized in that** it contains α,ω-diols containing 2 to 6 carbon atoms as component d).

5. An antifoam agent as claimed in one or more of claims 1 to 4, **characterized in that** it contains one or more saturated or mono- or polyunsaturated linear carboxylic acids as component a).

6. An antifoam agent as claimed in one or more of claims 1 to 5, **characterized in that** it contains polypropylene glycols and/or ethylene oxide/propylene oxide block polymers with molecular weights of 3,000 to 4,000 as component b).

7. An antifoam agent as claimed in one or more of claims 1 to 6, **characterized in that** it contains one or more primary linear or branched, aliphatic C₇₋₁₀ alcohols as component c).

8. An antifoam agent as claimed in one or more of claims 1 to 6, **characterized in that** it contains vegetable or animal oils as component c).

9. An antifoam agent as claimed in one or more of claims 1 to 8, **characterized in that** it is free from mineral oil and/or emulsifiers.

10. The use of the antifoam agent claimed in one or more of claims 1 to 9 as a foam-suppressing additive for paint coagulating baths.

## Revendications

1. Antimousse contenant une association
a) d'acides carboxyliques comportant 10 à 22 atomes de C, linéaires ou ramifiés, insaturés ou saturés,
b) de polypropylèneglycols et/ou de polymères à blocs d'oxyde d'éthylène et d'oxyde de propylène présentant une masse molaire comprise dans l'intervalle de 1000 à 5000,
c) d'alcools primaires comportant 5 à 16 atomes de C et/ou d'esters d'acides gras de glycérine
dans un rapport pondéral de 1 à 30 parties en poids de a) pour 1 à 50 parties en poids de b) pour 50 à 90 parties en poids de c).

2. Antimousse selon la revendication 1, **caractérisé en ce qu'**il contient en plus comme composant d) 1 à 30 parties en poids de diols comportant 2 à 10 atomes de C.

3. Antimousse selon la revendication 1, **caractérisé en ce qu'**il contient
a) 1 à 30 % en poids d'acides carboxyliques comportant 10 à 22 atomes de C, linéaires ou ramifiés, insaturés ou saturés,
b) au total 1 à 49 % en poids de polypropylèneglycols et/ou polymères à blocs d'oxyde d'éthylène et d'oxyde de propylène possédant une masse molaire comprise dans l'intervalle de 1000 à 5000,
c) au total 50 à 90 % en poids d'alcools primaires présentant 5 à 16 atomes de C et/ou d'esters d'acides gras de glycérine et
d) 0 à 30 % en poids de diols comportant 2 à 10 atomes de C,
ainsi que le cas échéant d'autres substances actives ou adjuvantes, la somme des constituants faisant 100 %.

4. Antimousse selon l'une des deux ou les deux revendications 2 et 3, **caractérisé en ce qu'**il contient comme composant d) des α,ω diols comportant 2 à 6 atomes de C.

5. Antimousse selon une ou plusieurs des revendications 1 à 4, **caractérisé en ce qu'**il contient comme composant a), un ou plusieurs acides carboxyliques linéaires, saturés ou mono- ou polyinsaturés.

6. Antimousse selon une ou plusieurs des revendications 1 à 5, **caractérisé en ce qu'**il contient comme composant b), des polypropylèneglycols et/ou des polymères à blocs d'oxyde d'éthylène et d'oxyde de propylène présentant une masse molaire comprise dans l'intervalle de 3000 à 4000.

7. Antimousse selon une ou plusieurs des revendications 1 à 6, **caractérisé en ce qu'**il contient comme composant c), un ou plusieurs alcools aliphatiques, primaires, linéaires ou ramifiés comportant 7 à 10 atomes de C.

8. Antimousse selon une ou plusieurs des revendications 1 à 6, **caractérisé en ce qu'**il contient comme composant c) des huiles végétales ou animales.

9. Antimousse selon une ou plusieurs des revendications 1 à 8, **caractérisé en ce qu'**il est exempt d'huile minérale et/ou d'émulsifiants.

10. Utilisation de l'antimousse selon une ou plusieurs des revendications 1 à 9, comme additif inhibant la mousse de bains de coagulation de laques.
